# EUROPÄISCHE PATENTSCHRIFT

(11) **EP 1 032 278 B1**
(45) Veröffentlichungstag und Bekanntmachung des Hinweises auf die Patenterteilung: **12.03.2003**
(21) Anmeldenummer: 98956910.8
(22) Anmeldetag: 13.11.1998
(51) Int. Cl.: A23K 1/18, A47G 21/00

(54) **BESTECK**
CUTLERY
COUVERT

(30) Priorität: 18.11.1997 DE 29720379 U
(43) Veröffentlichungstag der Anmeldung: 06.09.2000
(73) Patentinhaber: Morgan, Robert, 27337 Blender (DE)
(72) Erfinder: Morgan, Robert, 27337 Blender (DE)
(74) Vertreter: Eisenführ, Speiser & Partner
(86) Internationale Anmeldenummer: EP9807262
(87) Internationale Veröffentlichungsnummer: WO99025205

(56) Entgegenhaltungen:
- EP-A- 0 614 823
- WO-A-96/20604
- DE-C- 3 426 203
- DE-U- 9 012 269
- GB-A- 2 311 203
- US-A- 5 011 679
- US-A- 5 346 710
- US-A- 5 378 418

## Beschreibung

Bekanntlich wird Tiernahrung meistens in Dosen, Schalen oder anderen Tiernahrungsbehältnissen verpackt. Beim Verfüttern der Tiernahrung wird dann die Nahrung regelmäßig mit einem entsprechenden Werkzeug, z.B. Besteck wie einem Löffel, einer Gabel o.dgl. aus dem Tiernahrungsbehältnis geholt und eine entsprechende Portion Tiernahrung für das zu fütternde Tier fertiggestellt. Hiernach wird das Werkzeug entweder gereinigt oder es verbleibt in dem Tiernahrungsbehältnis bis zum nächsten Gebrauch. Mit der Zeit trocknet jedoch die am Werkzeug anhaftende Tiernahrung an und läßt sich nach längerem Antrocknen nur noch schwer hiervon lösen. Auch haben viele Benutzer Probleme mit solch angetrockneter Tiernahrung und widerstrebt ihren Reinlichkeitsvorstellungen.

Der Erfindung liegt die Aufgabe zugrunde, die vorgenannten Nachteile zu vermeiden und die Darreichung der Tiernahrung attraktiver zu gestalten.

Erfindungsgemäß wird zur Lösung der gestellten Aufgabe ein - sehr umweltfreundlich zu entsorgendes - Besteck vorgeschlagen, welches für die tierische Nahrung geeignet ist und aus Tierhaut besteht. Vorteilhafte Verwendungen sind in den Unteransprüchen beschrieben.

Insbesondere dann, wenn das Besteck z.B. ein Löffel, Gabel, usw. aus getrockneter und geformter Tierhaut besteht, kann es selbst nach Gebrauch an das zu fütternde Tier, z.B. ein Hund, verfüttert werden, welcher sich über den zusätzlichen "Snack" freuen kann.

Aus US-A-S 378 418 ist eßbares Besteck, das aus Protein tierischen Ursprungs und pflanzlichen Materialien besteht bekannt.

Mit dem erfindungsgemäßen Besteck wird die Produktaufmachung der Tiernahrung insgesamt attraktiver und durch die Zurverfügungstellung ist es nicht mehr notwendig, mit Tiernahrung verschmutztes Besteck zu reinigen.

Das erfindungsgemäße Besteck kann in einfachster Art an den Tiernahrungsverpackungen appliziert werden. Die Applikation eines Tierhaut-Löffels kann beispielsweise auf die gleiche Art und Weise erfolgen, wie die Applikation eines Trinkhalms an einem Softpack oder einem Trinkbecher. Jeder andere Einsatz eines. Applikators ist jedoch ebenfalls möglich.

Die Erfindung wird nachstehend anhand eines in den Figuren dargestellten Ausführungsbeispiels näher erläutert:
- Fig. 1: zeigt eine Tiernahrungsverpackung mit einer applizierten Gabel;
- Fig. 2: zeigt eine Tiernahrungsverpackung mit einem applizierten Löffel.

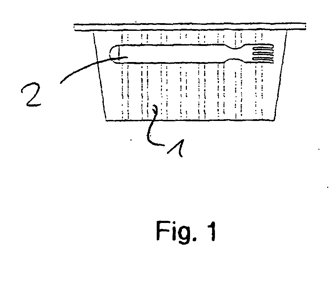

Fig. 1 zeigt eine Tiernahrungsverpackung 1 mit einer hieran befestigten Gabel 2.

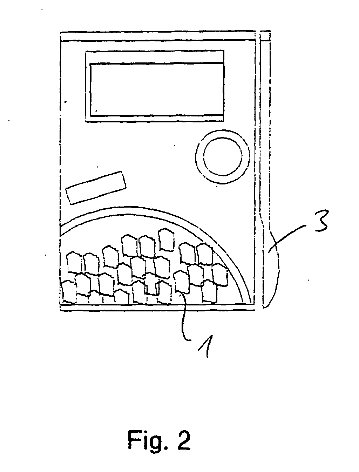

Fig. 2 zeigt eine Tiernahrungsverpackung 1 mit einem daran applizierten Messer 3.

Sowohl die Gabel 2 als auch der Löffel 3 sind für die Tiernahrung geeignet und bestehen aus Futtermittel. Hierzu besteht beispielsweise die Gabel 2 aus getrockneter und zur Gabel geformter Tierhaut.

Damit nicht Feuchtigkeit zu schnell in das Nahrungsmittel-Besteck dringen kann, kann es vorteilhaft sein, es mit einer entsprechenden Schutzglasur oder Schutzschicht zu versehen, welche das Eindringen von Feuchtigkeit in die Tierhaut verhindert oder verzögert. Auch eine solche Glasur ist selbstverständlich für die Nahrung geeignet und kann darüber hinaus mit Gewürzen oder anderen Geschmacksstoffen versetzt werden, so daß die Attraktivität zum Verzehr aufgrund des gesteigerten Geschmackseindrucks noch erhöht wird.

Selbstverständlich ist auch möglich, vorteilhaft in die Schutzglasur Zusatzstoffe, z.B. veterinärmedizinische Stoffe wie z.B. Tierarzneimittel oder Tieraufbaupräparate einzubringen, welche bei dem Verzehr automatisch vom Tier mit aufgenommen werden. So ist es beispielsweise vorteilhaft, wenn in der Schutzglasur selbst oder sonstwo im Besteck selbst Tieraufbaupräparate wie beispielsweise Mineralien, Kalium, Kalzium, Tierarznei usw., welche für ein Tier nützlich sind, einzubringen. Jedweder andere Zusatz ist jedoch ebenfalls möglich.

Selbstverständlich ist auch möglich, wenigstens einen Teil der Tiernahrungsverpackung aus geformtem Futtermittel, z.B. Tierhaut oder gepreßtes und verfestigtes Tierfutter, auszubilden. Dies ist besonders dann vorteilhaft, wenn der Teil aus Futtermitteln hergestellt ist, welcher im Bereich der Tiernahrungsbehältnis-Öffnung liegt und zur Öffnung des Tiernahrungsbehältnisses dient, z.B. von dem Behältnis weggenommen werden muß. Dieser Teil der Tiernahrungsverpackung kann gleichzeitig als wie oben beschriebenes Besteck ausgebildet und verwendet werden.

## Patentansprüche

1. Aus Tierhaut bestehendes und geformtes Besteck, nämlich ein Löffel und/oder eine Gabel und/oder ein Messer.

2. Verwendung eines aus Tierhaut bestehenden und geformten Bestecks, nämlich einer Gabel und/oder eines Messers und/oder eines Löffels zum Portionieren oder Zerteilen von Tiernahrung aus einer Verpackung, die die Tiernahrung aufnimmt.

3. Verwendung eines aus Tierhaut bestehenden und geformten Bestecks, nämlich eines Löffels und/oder einer Gabel und/oder eines Messers zur Entnahme von Tiernahrung aus einem Futtermittelbehälter und anschließender Verfütterung an ein Tier.

4. Besteck nach Anspruch 1, bei dem das Besteck mit einer Schutzschicht zur Verhinderung des Eindringens von Feuchtigkeit versehen ist

5. Besteck nach Anspruch 4,
**dadurch gekennzeichnet, dass** in die Schutzschicht Geschmacksverstärker oder Gewürze oder Zusatzstoffe, z. B. veterinärmedizinische Stoffe wie Kalzium, Mineralien, Kalium oder Tierarzneien eingebracht sind.

6. Verpackung für Tiernahrung mit wenigstens einem daran applizierten Besteck nach einem der vorhergehenden Ansprüche.

## Claims

1. Cutlery, which is a spoon and/or a fork and/or a knife, consisting of and fashioned from animal hide.

2. Use of a piece of cutlery, which is a spoon and/or a fork and/or a knife, consisting of and fashioned from animal hide for portioning or dividing animal food from a packaging which accommodates the animal food.

3. Use of a piece of cutlery, which is a spoon and/or a fork and/or a knife, consisting of and fashioned from animal hide for removing animal food from a feed container and subsequently feeding it to an animal.

4. Cutlery according to Claim 1, which is provided with a protecting coating for preventing moisture permeation.

5. Cutlery according to Claim 4, **characterized in that** flavour enhancers or spices or additives, for example substances for use in veterinary medicine, such as calcium, minerals, potassium or medicines for animal use, are incorporated into the protective coating.

6. Packaging for animal food comprising at least one piece of cutlery according to one of the preceding claims which is applied thereto.

## Revendications

1. Couvert constitué et formé de peau d'animal, à savoir une cuillère et/ou une fourchette et/ou un couteau.

2. Utilisation d'un couvert constitué et formé de peau d'animal, à savoir une fourchette et/ou un couteau et/ou une cuillère pour portionner ou pour découper de la nourriture pour animaux qui provient d'un emballage qui contient la nourriture pour animaux.

3. Utilisation d'un couvert constitué et formé de peau d'animal, à savoir une cuillère et/ou une fourchette et/ou un couteau pour prélever de la nourriture pour animaux d'un récipient de nourriture pour animaux et ensuite nourrir un animal.

4. Couvert selon la revendication 1, dans lequel le couvert est muni d'une couche de protection pour empêcher la pénétration d'humidité.

5. Couvert selon la revendication 4, **caractérisé en ce que** dans la couche de protection sont insérés des exhausteurs de goût, des épices ou des additifs, par exemple des substances de médecine vétérinaire telles que du calcium, des minéraux, du potassium et des médicaments pour animaux.

6. Emballage pour de la nourriture pour animaux avec au moins un couvert selon l'une quelconque des revendications précédentes qui s'applique à celui-ci.
